# EUROPÄISCHE PATENTSCHRIFT

(11) **EP 3 867 083 B1**
(45) Veröffentlichungstag und Bekanntmachung des Hinweises auf die Patenterteilung: **13.04.2022**
(21) Anmeldenummer: 20713860.3
(22) Anmeldetag: 18.03.2020
(51) Int. Cl.: B60D 1/01, B60D 1/64, B62D 53/12

(54) **PRIMÄRKOPPLUNGSVORRICHTUNG UND VERFAHREN ZUM VERBINDEN EINER PRIMÄRKOPPLUNGSVORRICHTUNG**
PRIMARY COUPLING DEVICE AND METHOD FOR CONNECTING A PRIMARY COUPLING DEVICE
DISPOSITIF D'ACCOUPLEMENT PRIMAIRE ET PROCÉDÉ DE CONNEXION D'UN DISPOSITIF D'ACCOUPLEMENT PRIMAIRE

(30) Priorität: 05.04.2019 DE 102019108953
(43) Veröffentlichungstag der Anmeldung: 25.08.2021
(73) Patentinhaber: SAF-HOLLAND GmbH, 63856 Bessenbach (DE)
(72) Erfinder: KÖSTER, Mario Sebastian, 78351 Bodman-Ludwigshafen (DE)
(74) Vertreter: Müller Schupfner & Partner Patent- und Rechtsanwaltspartnerschaft mbB
(86) Internationale Anmeldenummer: PCT/EP2020/057439
(87) Internationale Veröffentlichungsnummer: WO 2020/200787

(56) Entgegenhaltungen:
- WO-A1-2007/125085
- WO-A1-2008/009660
- DE-A1- 10 155 056
- JP-U- S58 181 604
- Anonymous: "Fluid - Wikipedia", , 27. November 2018 (2018-11-27), XP055698959, Gefunden im Internet: URL:https://de.wikipedia.org/w/index.php?t itle=Fluid&direction=prev&oldid=188062001 [gefunden am 2020-05-27]

## Beschreibung

Die Erfindung betrifft eine Primärkopplungsvorrichtung, insbesondere für ein automatisches Kupplungssystem, für ein Nutzfahrzeug, eine Sattelkupplungsanordnung und ein Verfahren zum Verbinden einer Primärkopplungsvorrichtung mit einer Sekundärkopplungsvorrichtung.

Automatische Kupplungssysteme sind bereits aus dem Stand der Technik bekannt, diese dienen dazu, einen Energiefluss zwischen einem Zugfahrzeug und einem Auflieger oder Anhänger zu realisieren. Diese automatischen Kupplungssysteme verfügen meist auf der Zugfahrzeugseite über einen Stecker und auf der Anhängerseite über eine Steckdose. Durch das Annähern des Zugfahrzeugs relativ zum Anhänger - während des Ankuppelvorgangs - werden die Steckdose und der Stecker zueinander ausgerichtet und gleichzeitig miteinander verbunden, sodass Energie, insbesondere ein Strom, vom Zugfahrzeug auf den Anhänger fließen kann. Dieser Prozess des automatischen Koppelns der Steckdose und des Steckers ist jedoch relativ anfällig und führt gerade bei einer schnellen Annäherung des Zugfahrzeugs an den Anhänger zu einem nicht "ordnungsgemäßen" Verbinden des Steckers und der Steckdose, sodass das automatische Kupplungssystem beschädigt werden kann und/oder dass keine Energieübertragung zwischen dem Anhänger und dem Zugfahrzeug stattfinden kann.

Die JP S58 181604 U betrifft eine Sattelkupplungsanordnung mit einer Koppelmöglichkeit. Die Koppelbarkeit der Sattelkupplungsanordnung wird dabei durch ein Verfahren von Steckerelementen in Vertikalrichtung erreicht.

Die DE 101 55 056 A1 betrifft ein Steckkupplungssystem zum Verbinden von Leitungen zwischen einem ersten und einem zweiten Fahrzeug, wobei die Leitungen zumindest einen Stecker und eine Steckerbuchse umfassen. Die Steckerbuchse ist dabei verschiebbar an dem ersten Fahrzeug gelagert und mit einer Antriebsvorrichtung zum Ein- und Ausfahren der Steckerbuchse in den/aus dem Stecker der Steckervorrichtung versehen.

Die WO 2007/125085 A1 betrifft ein Kopplungssystem zum Verbinden von Versorgungsleitungen zwischen einem Anhänger und einem Zugfahrzeug, umfassend eine an dem Zugfahrzeug angeordnete Steckerbuchse und ein an dem Auflieger angeordnetes Tragelement mit einem Stecker.

Es ist daher Aufgabe der vorliegenden Erfindung eine sichere Verbindung und Ausrichtung bei einem automatischen Kupplungssystem bereitzustellen.

Diese Ausgabe wird mit einer Primärkopplungsvorrichtung gemäß Anspruch 1, mit einer Sattelkupplungsanordnung gemäß Anspruch 7 und mit einem Verfahren gemäß Anspruch 9 gelöst. Weitere Merkmale, Vorteile und beispielhafte Ausführungsformen ergeben sich aus den Unteransprüchen, der Beschreibung und den Figuren.

Die Erfindung betrifft eine Primärkopplungsvorrichtung einer Sattelkupplungsanordnung oder eines Anhängers, insbesondere eines Sattelaufliegers, wobei die Primärkopplungsvorrichtung einen Grundkörper, einen Antrieb und ein Steckerelement umfasst, wobei der Grundkörper dazu ausgelegt ist, an der Sattelkupplungsanordnung und/oder dem Anhänger festgelegt zu sein, wobei das Steckerelement relativ zum Grundkörper mittels des Antriebs, insbesondere in eine Verlagerungsrichtung, verlagerbar ist. Die Primärkopplungsvorrichtung ist insbesondere eine Primärkopplungsvorrichtung für ein Nutzfahrzeug. Ein Nutzfahrzeug im Sinne der Erfindung ist insbesondere ein straßentaugliches Fahrzeug mit einem zulässigen Gesamtgewicht von mindestens 3,51 Tonnen, bevorzugt von mindestens 7,51 Tonnen und besonders bevorzugt von mindestens 15,01 Tonnen. In anderen Worten kann die Primärkopplungsvorrichtung Teil eines automatischen Kupplungssystems sein, welches dazu dient, ein Anhängerfahrzeug energietechnisch und/oder informationstechnisch automatisch mit einem Zugfahrzeug zu verbinden. Die erfindungsgemäße Primärkopplungsvorrichtung kann dabei derjenige Anteil des automatischen Kupplungssystems sein, welcher an der Sattelkupplungsanordnung angeordnet ist oder die Primärkopplungsvorrichtung kann den Teil des automatischen Kupplungssystems ausbilden, welcher an dem Anhänger, insbesondere schwenkbar um einen Königszapfen des Anhängers, angeordnet/gelagert ist. Die erfindungsgemäße Primärkopplungsvorrichtung umfasst einen Grundkörper, einen Antrieb und ein Steckerelement. Der Grundkörper dient dazu, an der Sattelkupplungsanordnung oder dem Anhänger festgelegt zu sein. Der Grundkörper kann beispielsweise reversibel, insbesondere mittels Schrauben, festgelegt sein, sodass dieser in einfacher Weise ausgetauscht werden kann. Beispielsweise kann der Grundkörper, wenn dieser an der Sattelkupplungsanordnung festgelegt ist, an der Sattelkupplungsplatte angeordnet sein. Bevorzugt ist der Grundkörper unterhalb der Einfahröffnung der Sattelkupplungsplatte angeordnet. Die Einfahröffnung der Sattelkupplungsplatte ist diejenige Öffnung, in welche der anzukuppelnde bzw. einzukuppelnde Königszapfen eingeführt wird, wenn dieser von einer entkoppelten Stellung in die eingekuppelte Stellung verlagert wird. In anderen Worten kann dies bedeuten, dass die Einfahröffnung diejenige Öffnung der Sattelkupplungsplatte ist, in welche der Königszapfen eingeführt wird um ein Einkuppeln des Königszapfens zu erreichen. Vorteilhafterweise wird die Einfahröffnung durch einen Raum zwischen den Kupplungshörnern der Sattelkupplungsplatte definiert/ausgebildet. Der Grundkörper der Primärkopplungsvorrichtung kann insbesondere als ein Blechteil ausgestaltet sein, denn hierdurch können Fertigungskosten gespart werden. Neben dem Grundkörper verfügt die Primärkopplungsvorrichtung auch über ein Steckerelement. Das Steckerelement dient dazu, mit einem korrespondierend ausgebildeten Element, insbesondere mit einer Steckervorrichtung einer Sekundärkopplungsvorrichtung, verbindbar und/oder verbunden zu sein, sodass elektrische Signale und/oder Informationen und/oder Energie zwischen dem Steckerelement und dem korrespondierend ausgebildeten Element übertragen werden können. In anderen Worten kann dies bedeuten, dass das Steckerelement mit beispielsweise einer Steckervorrichtung einer Sekundärkopplungsvorrichtung ein automatisches Kupplungssystem ausbilden kann, sodass insbesondere elektrische Signale und/oder Energie und/oder Informationen zwischen einem Zugfahrzeug und einem Anhänger übertragen werden können. Für die Informations- und/oder Energieübertragung verfügt das Steckerelement insbesondere über hydraulische und/oder pneumatische und/oder elektrische Kontakte, wobei die Kontakte insbesondere dazu ausgelegt sind, mit korrespondierenden Kontakten einer Steckervorrichtung einer Sekundärkopplungsvorrichtung verbindbar und/oder verbunden zu sein. Vorteilhafterweise erstrecken sich die Kontakte des Steckerelements in die Verlagerungsrichtung. Das Steckerelement ist vorteilhafterweise innerhalb der Primärkopplungsvorrichtung verlagerbar relativ zum Grundkörper gelagert. Beispielsweise kann diese Lagerung des Steckerelements durch eine oder eine Vielzahl von Linearführungen erreicht werden. Alternativ bevorzugt kann auch vorgesehen sein, dass der Grundkörper selbst die Führungseinheit ausbildet, sodass das Steckerelement nicht durch separate Linearführungen gelagert ist, sondern lediglich durch den Grundkörper. Sollte die Primärkopplungsvorrichtung eine Primärkopplungsvorrichtung eines Anhängers sein, so ist es zweckmäßig wenn der Grundkörper, insbesondere durch den Einsatz eines Tragarms oder einer Tragstruktur, relativ zum Königszapfen des Anhängers, vorteilhafterweise rotatorisch, gelagert ist. Unabhängig davon, ob die Primärkopplungsvorrichtung an einer Sattelkupplungsanordnung oder einem Anhänger befestigt ist, ist es bevorzugt, wenn der Grundkörper und/oder das Steckerelement, insbesondere in Richtung der Erstreckung des Königszapfens, unterhalb des Königszapfens angeordnet ist/sind. Hierdurch wird verhindert, dass während des Ankuppelprozesses der Königszapfen mit Teilen der Primärkopplungsvorrichtung, insbesondere dem Grundkörper, dem Antrieb und/oder dem Steckerelement kollidieren kann. Bevorzugt ist es, wenn der Antrieb der Primärkopplungsvorrichtung zumindest teilweise vom Grundkörper umschlossen ist. Durch dieses Umschließen des Antriebs der Primärkopplungsvorrichtung durch den Grundkörper kann erreicht werden, dass dieser Antrieb gegen eine Beschädigung und/oder gegen sonstige äußere Einflüssen geschützt ist. Der Antrieb der Primärkopplungsvorrichtung dient dazu, eine Verlagerung des Steckerelements relativ zum Grundkörper zu erreichen. Dieser Antrieb ist insbesondere derart ausgestaltet, dass dieser eine Verlagerbarkeit des Steckerelements relativ zum Grundkörper in Richtung einer translatorischen Richtung ermöglicht, welche insbesondere die Verlagerungsrichtung ist. Die Verlagerungsrichtung ist vorteilhafterweise diejenige Richtung, in welche sich das Steckerelement bewegen muss, um mit einer Steckvorrichtung einer Sekundärkopplungsvorrichtung des automatischen Kupplungssystems in Eingriff zu gelangen. Erfindungsgemäß ist die Verlagerungsrichtung derart ausgerichtet, dass diese parallel zur Erstreckungsrichtung der Einfahröffnung der Sattelkupplungsplatte ausgerichtet ist. Durch das Vorsehen eines Antriebs in der Primärkopplungsvorrichtung wird erreicht, dass der Ausrichtungsprozess von dem eigentlichen Verbinden des Steckerelements - mit der korrespondierenden Steckervorrichtung einer Sekundärkopplungsvorrichtung des automatischen Kupplungssystems - getrennt ausgeführt werden kann. In anderen Worten kann dies bedeuten, dass aufgrund des Antriebs ermöglicht ist, dass die eigentliche Verbindung des Steckerelements in einem separaten Arbeitsgang - zum Ausrichten des Steckerelements und/oder der Steckervorrichtung - vorgenommen werden kann. Durch dieses Trennen der beiden Vorgänge kann sichergestellt werden, dass insbesondere die Ausrichtung abgeschlossen ist, bevor das eigentliche Verbinden des Steckerelements mit dem korrespondierenden Gegenstück des automatischen Kupplungssystems erfolgt, sodass die erfindungsgemäße Primärkopplungsvorrichtung in der Lage ist, ein besonders sicheres automatisches Kuppeln zu erreichen.

Vorteilhafterweise weist der Antrieb einen Energieanschluss auf. Ein solcher Energieanschluss kann beispielsweise ein Strom-, ein Öl- und/oder ein Luftdruckanschluss sein. Durch das Vorsehen des Energieanschlusses ist es möglich, gezielt ein Betätigen des Antriebs herbeizuführen, um eine Verlagerung des Steckerelements relativ zum Grundkörper, insbesondere in die Verlagerungsrichtung, zu erreichen.

Bevorzugt ist der Antrieb ein pneumatischer, ein elektrischer oder ein hydraulischer Antrieb. Durch das Ausbilden des Antriebs als ein hydraulischer Antrieb wird erreicht, dass auch große Kräfte ausgeübt werden können. Bei der Ausgestaltung des Antriebs als ein pneumatischer Antrieb kann erreicht werden, dass insbesondere auch bei Leckagen keine Umweltverschmutzung stattfindet. Darüber hinaus hat das Ausbilden des Antriebs als ein pneumatischer Antrieb auch noch den Vorteil, dass insbesondere vorhandene (Versorgungs-)Systeme des Nutzfahrzeugs (Zugfahrzeug oder Anhänger) genutzt werden können, um den Antrieb zu betreiben. Das Vorsehen eines hydraulischen oder eines pneumatischen Antriebs hat darüber hinaus auch noch den weiteren Vorteil, dass aufgrund der Kompressibilität der Arbeitsmedien dem Antrieb eine gewisse Federsteifigkeit verliehen werden kann, sodass hierdurch eine Überbelastung des Antriebs und/oder des Grundkörpers und/oder des Steckerelements durch die Federsteifigkeit des Arbeitsfluids verhindert werden kann. Die Verwendung eines elektrischen Antriebs ermöglicht ebenfalls die Nutzung von Energiequellen, wie z.B. Batterien, des Anhängers oder des Zugfahrzeugs, um ein Betreiben des Antriebs zu erreichen. Hierdurch resultiert ein besonders kostengünstiges System, denn die Energieversorgung des Antriebs kann besonders einfach nachgerüstet und/oder ausgestaltet werden.

Vorteilhafterweise ist der Antrieb ein hydrostatischer Antrieb. Ein hydrostatischer Antrieb ist insbesondere dadurch gekennzeichnet, dass diese Antriebsart auf dem Prinzip der Verdrängung basiert. Daher ist das Wirkprinzip eines hydrostatischen Antriebs insbesondere dadurch gekennzeichnet, dass ein Fluid ein Volumen verdrängt und dass das Fluid dabei insbesondere unter hohem Druck steht. In anderen Worten kann dies bedeuten, dass insbesondere Wandler oder andere Arten von dynamischen hydraulischen Antrieben keine hydrostatischen Antriebe darstellen. Beispielsweise kann der Antrieb als ein Radialkolbenmotor, ein Zahnradmotor oder als ein Flügelzellenmotor ausgebildet sein. Um die Bewegung des Rotors des Motors in eine lineare Bewegung umzusetzen, kann beispielsweise ein Spindelantrieb vorgesehen sein. Um eine möglichst schnelle Verlagerung des Steckerelements zum Grundkörper zu erreichen, ist es vorteilhaft, wenn der Spindelantrieb über einen mehrgängigen Gewindeantrieb verfügt. Alternativ oder zusätzlich bevorzugt kann die Verlagerung des Steckerelements zum Grundkörper auch mittels einer Zahnstange erfolgen.

Alternativ oder zusätzlich bevorzugt kann der Antrieb auch als einfachwirkender Zylinder ausgestaltet sein. Diese Art der Ausgestaltung weist insbesondere den Vorteil auf, dass hierdurch auf weitere Getriebeelemente verzichten kann, sodass eine besonders bauraumsparende und kostengünstige Primärkopplungsvorrichtung resultiert. Bevorzugt ist es, wenn der Antrieb als ein doppelwirkender Zylinder ausgestaltet ist, denn durch das Ausbilden als ein doppelwirkender Zylinder kann sowohl eine Verlagerung in positive als auch in negative Richtung erreicht werden, sodass der Antrieb sowohl ein "Einstecken" als auch ein "Ausstecken" des Steckerelements realisieren/vollziehen kann.

In einer bevorzugten Ausführungsform ist der Antrieb ein Druckluftzylinder. Durch das Ausbilden als ein Druckluftzylinder resultiert eine besonders bauraumsparende Primärkopplungsvorrichtung, welche darüber hinaus auch noch in Hinblick auf eine Umweltbelastung leckageunanfällig ist. Zusätzlich ermöglicht der Einsatz eines Druckluftzylinders, dass ein besonders schnelles Verfahren möglich ist und dass bereits vorhandene Systeme zum Betreiben bzw. zum Versorgen des Antriebs eingesetzt werden können, wie z.B. Kompressoren und/oder Drucklufttanks des Zugfahrzeugs oder des Anhängers. Bevorzugt ist es, wenn der Druckluftzylinder derart mit einem Federelement gekoppelt ist, dass das Federelement dazu vorgesehen ist, dass das Steckerelement relativ zum Grundkörper in eine Richtung der Verlagerungsrichtung zu verlagern und der Druckluftzylinder dafür vorgesehen ist, das Steckerelement relativ zum Grundkörper in die andere Richtung der Verlagerungsrichtung zu verlagern. In anderen Worten kann dies bedeuten, dass in eine (beispielsweise) positive Verlagerungsrichtung das Steckerelement durch die Beaufschlagung mit Druck des Druckluftzylinders verlagert wird und in die (beispielsweise) negative Verlagerungsrichtung das Steckerelement relativ zum Grundkörper durch das Federelement verlagert wird. Hierdurch kann erreicht werden, dass insbesondere beim Ausfall von Energie immer eine sichere Kraftbeaufschlagung des Steckerelements vorgesehen ist. Insbesondere ist diese Ausgestaltung dabei derart ausgestaltet, dass das Federelement dafür sorgt, dass das Steckerelement vom Grundkörper beabstandet ist. In anderen Worten kann dies bedeuten, dass das Federelement immer dann mehr mechanische Spannung aufweist, wenn das Steckerelement sich in der "ausgesteckten/nicht verbundenen" Position relativ zum Grundkörper befindet. Hierdurch kann beispielsweise sichergestellt werden, dass - selbst wenn der Druckluftzylinder nicht mehr mit Druckluft versorgt wird - weiterhin das Steckerelement sicher platziert ist, sodass weiterhin Energie und/oder Informationen vom Zugfahrzeug auf das Anhängerfahrzeug sicher übertragen werden können. Vorteilhafterweise bildet die Kolbenstange des Druckluftzylinders einen Teil einer Linearführung aus, welcher dazu dient, das Steckerelement relativ zum Grundkörper, insbesondere senkrecht zur Verlagerungsrichtung zu lagern. In anderen Worten kann die Kolbenstange des Druckluftzylinders dazu dienen, das Steckerelement senkrecht zur Verlagerungsrichtung relativ zum Grundkörper zu lagern. Es sei an dieser Stelle betont, dass diese Art der Ausbildung der Linearführung und des Steckerelements auch für andere Arten von Antrieben, welche einen Druckzylinder verwenden, beispielsweise ein Hydraulikzylinder, Einsatz finden können.

Vorteilhafterweise weist die Primärkopplungsvorrichtung einen zweiten Antrieb auf. Die Verwendung eines zweiten Antriebs kann beispielsweise dazu dienen, ein redundantes System bereitzustellen, sodass auch beim Ausfall eines Antriebs weiter eine sichere Verlagerung des Steckerelements relativ zum Grundkörper stattfinden kann. Alternativ oder zusätzlich bevorzugt kann der zweite Antrieb auch dazu ausgebildet sein, das Steckerelement lediglich in die positive Verlagerungsrichtung zu verlagern und der Antrieb dazu ausgelegt sein, das Steckerelement in die negative Verlagerungsrichtung zu verlagern. Die positive Verlagerungsrichtung ist insbesondere diejenige Richtung, in welche sich das Steckerelement vom Grundkörper während des "Einsteckvorgangs" distanziert. In anderen Worten, zeigt die Verlagerungsrichtung insbesondere von der Position des Steckerelements in einer ausgesteckten Stellung zu der Position des Steckerelements in einer eingesteckten Stellung, in welcher das Steckerelement beispielsweise mit einer Steckervorrichtung einer Sekundärkopplungsvorrichtung verbunden ist.

Vorteilhafterweise sind der erste Antrieb und der zweite Antrieb parallel angeordnet. Hierdurch kann ein besonders redundantes System erreicht werden. Unter parallel ist dabei zu verstehen, dass die Wirkbewegung des ersten Antriebs parallel zu der Wirkbewegung des zweiten Antriebs ist. Beispielsweise sind daher zwei Zylinder dann parallel zueinander, wenn die beiden Zylinderachsen parallel zu einander sind.

Bevorzugt ist die Primärkopplungsvorrichtung derart ausgestaltet, dass das Steckerelement , insbesondere ausschließlich, durch den Antrieb und/oder durch den zweiten Antrieb und/oder durch ein oder mehrere Federelemente verlagerbar ist. In anderen Worten, kann dies bedeuten, dass eine Verlagerung des Steckerelements relativ zum Grundkörper ausschließlich durch den ersten Antrieb und/oder durch den zweiten und/oder durch weitere Antriebe und/oder durch ein oder mehrere Federelemente bewerkstelligt werden kann. Beispielsweise kann dies dadurch erreicht werden, dass eine Bremsvorrichtung vorhanden ist und/oder eine Arretiervorrichtung, welche dafür sorgt, dass das Steckerelement ohne die Nutzung des Antriebs nicht verlagert werden kann. Durch das ausschließliche Verlagern des Steckerelements mittels des Antriebs kann sichergestellt werden, dass lediglich eine gewollte und/oder gezielte Verlagerung des Steckerelements stattfindet. Hierdurch kann daher auch die Sicherheit des Systems erhöht werden.

Bevorzugt umfasst das Steckerelement hydraulische und/oder pneumatische und/oder elektrische Kontakte, wobei die Kontakte dazu ausgelegt sind, mit korrespondierenden Kontakten einer Steckervorrichtung einer Sekundärkopplungsvorrichtung verbindbar und/oder verbunden zu sein. Das Steckerelement umfasst daher in anderen Worten hydraulische und/oder pneumatische und/oder elektrische Kontakte, welche mit korrespondierenden Kontakten einer Steckervorrichtung einer Sekundärkopplungsvorrichtung derart zusammenwirken und/oder verbunden werden können, sodass Energie und/oder Informationen in Form von elektrischer, pneumatischer und/oder hydraulischer Energie vom Steckerelement auf die Steckervorrichtung und damit in einer späteren Einbauposition vom Anhänger auf das Zugfahrzeug oder vom Zugfahrzeug auf den Anhänger übertragen werden kann. Die Sekundärkopplungsvorrichtung mit ihrer Steckervorrichtung bildet daher in anderen Worten ein automatisches Steckverbindungssystem eines automatischen Kupplungssystems mit der Primärkopplungsvorrichtung aus, wobei die Primärkopplungsvorrichtung am Anhänger oder am Zugfahrzeug angeordnet ist und die Sekundärkopplungsvorrichtung entsprechend am Zugfahrzeug oder am Anhänger.

Ein weiterer Aspekt der Erfindung betrifft eine Sattelkupplungsanordnung umfassend eine Primärkopplungsvorrichtung, insbesondere wie vorgehend und nachfolgend beschrieben, und eine Sattelkupplungsplatte, wobei die Sattelkupplungsplatte eine Aufliegerfläche aufweist, wobei die Aufliegerfläche eine nach außen weisende Normale aufweist, wobei vorteilhafterweise das Steckerelement und/oder der Grundkörper in einer Richtung senkrecht zu der Verlagerungsrichtung, insbesondere in Richtung der Normalen der Aufliegerfläche und/oder in eine Querrichtung, verschiebbar gelagert ist/sind, insbesondere um 5mm verschiebbar gelagert. Die Querrichtung steht dabei sowohl senkrecht auf der Normalen der Aufliegerfläche als auch senkrecht auf der Verlagerungsrichtung. Alternativ oder zusätzlich bevorzugt kann das Steckerelement auch verschieblich in Richtung der Normalen der Aufliegerfläche gelagert sein. Die Aufliegerfläche der Sattelkupplungsplatte ist dabei diejenige Fläche, in welcher im eingekuppelten Zustand der Sattelauflieger mittel oder unmittelbar aufliegt. Weiter bevorzugt oder alternativ kann das Steckerelement auch verschiebbar in Richtung der Verlagerungsrichtung gelagert sein, dies kann insbesondere durch ein Federelement erfolgen. Vorteilhafterweise ist dieses Federelement dabei mechanisch in Reihe mit dem Antrieb bzw. jeweils ein Federelement in Reihe mit einem Antrieb geschaltet. Diese Verlagerbarkeit des Steckerelements und/oder des Grundkörpers ermöglicht, dass eine ungenaue Positionierungen ausgeglichen werden kann. Die verschiebliche Lagerung kann beispielsweise dadurch geschehen, dass das Steckerelement federnd gegenüber den Linearführungen gelagert ist. Alternativ oder zusätzlich bevorzugt kann auch der Grundkörper, beispielsweise durch den Einsatz einer Gummilagerung, verlagerbar relativ zur Sattelkupplungsplatte gelagert sein. Vorteilhafterweise sind sowohl der Grundkörper als auch das Steckerelement derart senkrecht zur Verlagerungsrichtung verschiebbar gelagert, dass die beiden senkrecht zueinander stehenden Richtungen, welche auch senkrecht zur Verlagerungsrichtung stehen, jeweils Richtungen ausbilden, in welche der Grundkörper und/oder das Steckerelement verlagerbar sind/ist. Alternativ bevorzugt kann das Steckerelement auch rotationsstarr angeordnet sein. Hierdurch kann eine besonders mechanisch sichere Lagerung des Steckerelements erfolgen.

Vorteilhafterweise ist/sind das Steckerelement und/oder der Grundkörper in einer Richtung um die Normale und/oder senkrecht um die Normale schwenkbar gelagert, insbesondere um minimal +/- 5°, bevorzugt um minimal +/-10°. Durch diese rotatorische Verlagerbarkeit des Steckerelements und/oder des Grundkörpers - in Relation zur Sattelkupplungsplatte - kann erreicht werden, dass eine gewisse Lageabweichung der Primärkopplungsvorrichtung zur Sekundärkopplungsvorrichtung ausgeglichen werden kann ohne dass hierdurch eine Beschädigung entstehen kann. Vorteilhafterweise ist das Steckerelement um drei senkrecht zueinander stehende Achsen schwenkbar gelagert. Hierdurch kann eine besonders flexible Sattelkupplungsanordnung erreicht werden. Alternativ oder zusätzlich bevorzugt kann die Lagerung, insbesondere ausschließlich, um die Normale der Aufliegerfläche und/oder um die Verlagerungsrichtung und/oder um die Querrichtung schwenkbar gelagert sein. Hierdurch kann eine besonders sichere und kostengünstige Lagerung erfolgen, denn durch das rotationsfreie Lagern in eine oder einige Richtungen kann eine besonders einfache Lagerung stattfinden. Vorteilhafterweise erstreckt sich diese Verlagerbarkeit um die Normale der Aufliegerfläche und/oder um die Senkrecht dazu stehende oder stehenden Richtungen dabei um +/- 10°, wobei der Nullpunkt dieser Verlagerbarkeit - bei der Rotation um die Normale - insbesondere in Richtung der Erstreckungsrichtung der Einfahröffnung der Sattelkupplungsplatte liegt. In anderen Worten kann dies bedeuten, dass das Steckerelement und/oder der Grundkörper +/-10° schwenkbar von der Mitte der Einfahröffnung sind. Hierdurch kann ein besonders sicheres Einkuppeln des Steckerelements mit der Steckervorrichtung erfolgen, da ein besonders breiter Bereich von Winkeln abgedeckt ist. Besonders bevorzugt ist das Steckerelement und/oder der Grundkörper in einer Richtung um die Normale um minimal+/- 5° schwenkbar, denn hierdurch resultiert eine besonders bauraumsparende Sattelkupplungsanordnung, welche zugleich noch einen gewissen Ausgleich beim Einkuppeln bereitstellen kann.

Ein weiterer Aspekt der Erfindung betrifft ein Verfahren zum Verbinden von Energieleitungen (an) der Sattelkupplungsanordnung und Energieleitungen eines Anhängers, wobei der Anhänger einen Königszapfen und eine Sekundärkopplungsvorrichtung aufweist, wobei die Sattelkupplungsanordnung eine Sattelkupplungsplatte und eine Primärkopplungsvorrichtung, insbesondere wie vorgehend beschrieben, umfasst, wobei der Königszapfen von einer entkoppelten Position zu einer eingekuppelten Position relativ zur Sattelkupplungsplatte verlagert wird, insbesondere durch einen Antrieb, und wobei die Primärkopplungsvorrichtung mit der Sekundärkopplungsvorrichtung verbunden wird. Die Sekundärkopplungsvorrichtung stellt das Gegenstück zur Primärkopplungsvorrichtung in einem automatischen Kupplungssystems dar. In anderen Worten kann dies bedeuten, dass die Primärkopplungsvorrichtung derjenige Teil des automatischen Kupplungssystems ist, welcher auf der Sattelkupplungsanordnung befestigt ist und die Sekundärkopplungsvorrichtung derjenige Teil, welcher insbesondere schwenkbar um den Königszapfen, am Anhänger angeordnet ist. Die entkoppelte Position des Königszapfens sind dabei - relativ zu der Sattelkupplungsanordnung - diejenigen Positionen des Königszapfens, in welchen dieser nicht vollständig in die Einfahröffnung eingeführt ist. In anderen Worten sind daher die entkoppelten Positionen des Königzapfens diejenigen Positionen, in welchen sich der Königszapfen befinden kann, wenn dieser nicht in der Sattelkupplungsanordnung angeordnet ist. Die eingekuppelte Position hingegen ist insbesondere diejenige Position, in welcher sich der Königszapfen relativ zur Sattelkupplungsanordnung befindet, wenn der Königszapfen vollständig in die Einfahröffnung der Sattelkupplungsplatte eingefahren ist. Bevorzugt ist es, wenn der Königszapfen in der eingekuppelten Position nicht mehr aus der Einfahröffnung der Sattelkupplungsplatte herausgeführt werden kann. Beispielsweise kann dies dadurch erreicht werden, dass die Sattelkupplungsanordnung über einen Verriegelungsmechanismus verfügt, welcher verhindert, dass in der eingekuppelten Position der Königszapfen aus der Einfahröffnung heraustreten kann. Dieses Verhindern des Austretens des Königszapfens erfolgt dabei insbesondere formschlüssig, beispielsweise durch eine Verriegelungsklaue der Sattelkupplungsanordnung. Durch das Verbinden der Primärkopplungsvorrichtung, insbesondere des Steckerelements, mit der Sekundärkopplungsvorrichtung, insbesondere mit der Steckervorrichtung, kann erreicht werden, dass eine Energie- und/oder Informationsübertagungsmöglichkeit, insbesondere in Form eines Stroms, eines Hydraulikflusses und/oder eines Druckluftflusses, zwischen der Primärkopplungsvorrichtung und der Sekundärkopplungsvorrichtung hergestellt werden kann. Insbesondere erfolgt dieses Verbinden dabei derart, dass das Steckerelement der Primärkopplungsvorrichtung, insbesondere in die Verlagerungsrichtung, relativ zum Grundkörper verlagert wird, sodass die Leitungselemente des Steckerelements mit den korrespondierenden Leitungselementen der Steckervorrichtung der Sekundärkopplungsvorrichtung energieleitend in Eingriff bringbar sind. Hierzu können die Steckervorrichtung und/oder das Steckerelement bevorzugt über elektrische, pneumatische und/oder hydraulische Kontakte verfügen. Besonders bevorzugt ist es, wenn das Steckerelement und/oder die Steckervorrichtung korrespondierend zueinander ausgebildete Führungsrampen aufweisen, welche vorteilhafterweise als Zentrierrampen ausgebildet sind, sodass eine sichere Verbindung zwischen der Steckervorrichtung und dem Steckerelement etabliert werden kann.

In einer vorteilhaften Ausführungsform wird 0,1 bis 0,5 Sekunden vor dem Anordnen des Königszapfens in der eingekuppelten Position und/oder wenn der Königszapfen mit einer Schlossklaue der Sattelkupplungsanordnung kontaktiert der Antrieb aktiviert und/oder wird die Primärkopplungsvorrichtung mit der Sekundärkopplungsvorrichtung verbunden. Durch diese Art der Aktivierung wird erreicht, dass direkt bei dem Erreichen der eingekuppelten Position des Königszapfens eine energieleitende Verbindung zwischen dem Anhänger und dem Zugfahrzeug etabliert wird/ist.

In einer vorteilhaften Ausführungsform wird nach dem Anordnen des Königszapfens in der eingekuppelten Position die Primärkopplungsvorrichtung mit der Sekundärkopplungsvorrichtung verbunden. In anderen Worten kann dies bedeuten, dass zunächst der Königszapfen relativ zur Sattelkupplungsanordnung in die eingekuppelte Position verbracht wird und erst anschließend die Primärkopplungsvorrichtung mit der Sekundärkopplungsvorrichtung verbunden wird. Dieses Verbinden erfolgt insbesondere, wie bereits beschrieben, durch den Einsatz des/eines Antriebs. In anderen Worten kann dies bedeuten, dass das Verbinden der Primärkopplungsvorrichtung mit der Sekundärkopplungsvorrichtung in einem separaten Verfahrensschritt nach dem mechanischen verkuppeln des Königszapfens erfolgt. Durch die Separation des Ausrichtungsschritts von dem Verbindungsschritt der Primärkopplungsvorrichtung mit der Sekundärkopplungsvorrichtung kann die Sicherheit des automatischen Verbindens gesteigert werden, da erst nach einem sicheren Ausrichten das Verbinden stattfindet.

Weitere Vorteile und Merkmale der vorliegenden Erfindung ergeben sich aus der nachfolgenden Beschreibung in Bezug auf die Figuren.
Figur 1: Zeigt ein automatisches Kupplungssystem mit einer erfindungsgemäßen Primärkopplungsvorrichtung;
Figur 2: Zeigt eine weitere Ansicht eines automatisches Kupplungssystem mit einer erfindungsgemäßen Primärkopplungsvorrichtung;
Figur 3: Zeigt eine Sattelkupplungsanordnung und einen Königszapfen im eingekuppelten Zustand; und
Figur 4: Zeigt einen Schnitt durch ein automatisches Kupplungssystem umfassend eine erfindungsgemäße Primärkopplungsvorrichtung.

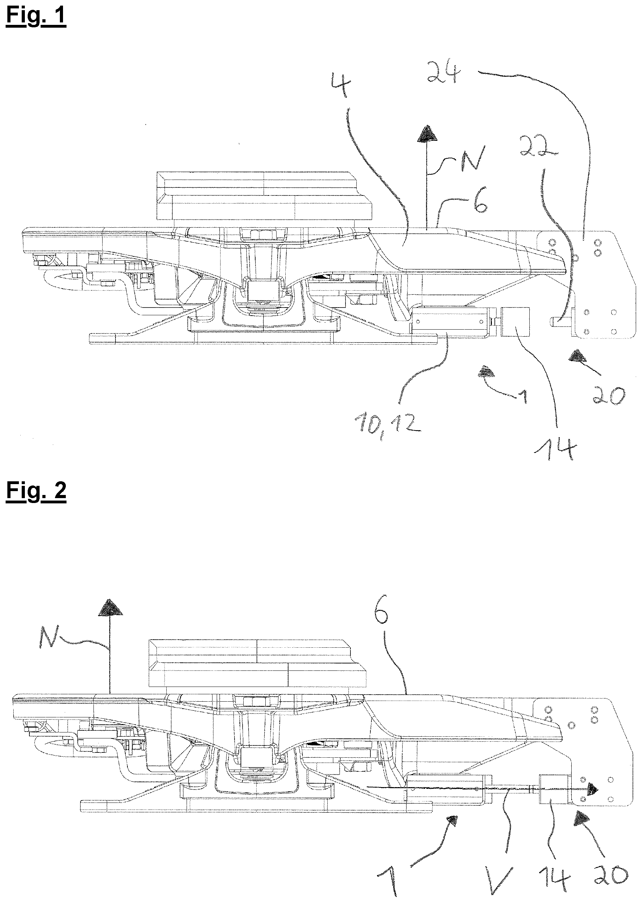

In der **Figur 1** ist ein automatisches Kupplungssystem gezeigt, welches eine Primärkopplungsvorrichtung 1 und eine Sekundärkopplungsvorrichtung 20 umfasst. Die Primärkopplungsvorrichtung 1 umfasst einen Grundkörper 10, welcher einen Antrieb 12 umschließt. Die Primärkopplungsvorrichtung 1 verfügt auch über ein Steckerelement 14. Dieses Steckerelement 14 ist durch den Antrieb 12 verlagerbar, sodass die in dem Steckerelement 14 vorhandenen Kontakte energieleitend und/oder informationsübertragend mit den, insbesondere korrespondierend ausgebildeten, Kontakten der Steckervorrichtung 22 der Sekundärkopplungsvorrichtung 20 in Eingriff bringbar sind. Die Steckervorrichtung 22 der Sekundärkopplungsvorrichtung 20 ist über den Tragarm 24 rotatorisch um den Königszapfen 8 gelagert. Die Primärkopplungsvorrichtung 1 ist unterhalb der Einfahröffnung 5 der Sattelkupplungsplatte 4 angeordnet und reversibel an einem Querverbinder 7 der Sattelkupplungsplatte 4 angeordnet. Unterhalb der Einfahröffnung 5 bedeutet dabei insbesondere, dass die Primärkopplungsvorrichtung 1 entgegen der nach außen zeigenden Normale N der Aufliegerfläche 6 unterhalb der Einfahröffnung 5 der Sattelkupplungsplatte 4 angeordnet ist. Die Aufliegerfläche 6 der Sattelkupplungsplatte 4 ist insbeosndere diejenige Fläche, an/auf welcher der Sattelauflieger aufliegt, wenn der Anhänger eingekuppelt ist.

In der **Figur 2** ist dieselbe Ausführungsform, wie in der Figur 1 gezeigt, wobei in der Figur 2 das Steckerelement 14 mit der Steckervorrichtung 22 verbunden ist (eingekuppelter Zustand mit verbundenem Steckerelement 14). Diese Verbindung erfolgt dabei dadurch, dass das Steckerelement 14 entlang der Verlagerungsrichtung V durch den Antrieb 12 relativ zum Grundkörper 10 verlagert (worden) ist. Das Steckerelement 14 ist dabei derart gelagert, dass dieses in Richtung der Verlagerungsrichtung V und/oder in Richtung der Normalen N der Aufliegerfläche 6 verlagerbar ist, insbesondere um +/- 3 mm. Alternativ oder zusätzlich bevorzugt kann das Steckerelement 14 auch um eine Richtung senkrecht zu der Verlagerungsrichtung V und senkrecht zu der Normalen N verlagerbar gelagert sein, insbesondere um +/- 3mm. Besonders bevorzugt ist es, wenn das Steckerelement 14 alternativ oder zusätzlich bevorzugt auch um diese Richtung rotierbar gelagert ist.

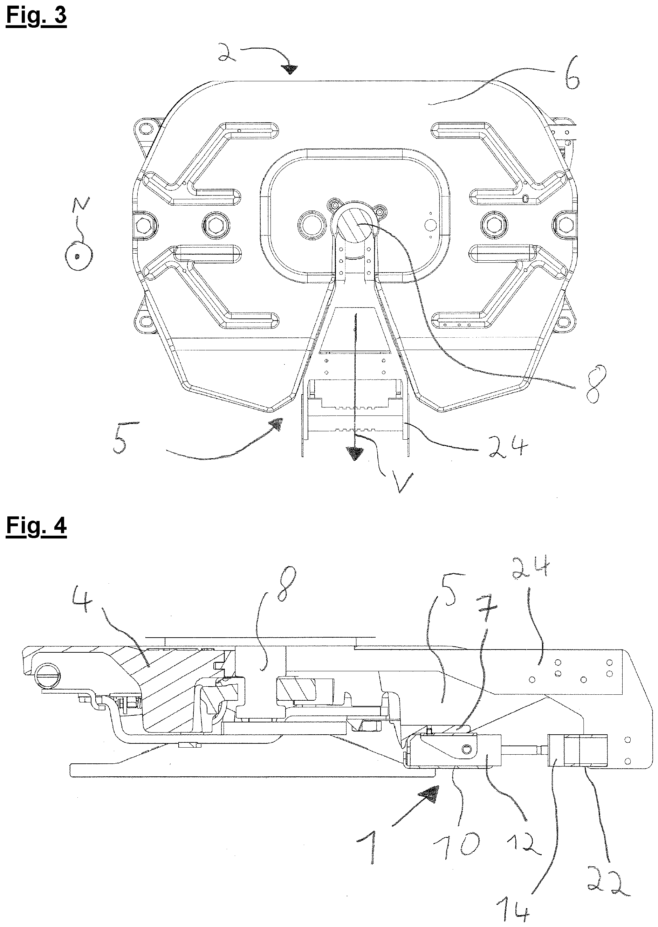

In der **Figur 3** ist ein Schnitt durch das automatische Kupplungssystem im eingekuppelten Zustand gezeigt. Wie aus der Figur 3 erkennbar, ist bei der dargestellten Ausführungsform der Königszapfen 8 vollständig in die Einfahröffnung 5 eingeführt. Darüber hinaus erstreckt sich auch die Tragstruktur 24 in die Einfahröffnung 5 der Sattelkupplungsplatte 4. Die Einfahröffnung 5 erstreckt sich dabei entlang der Verlagerungsrichtung V, welche wiederum senkrecht auf der Normalen N der Aufliegerfläche 6 steht.

In der **Figur 4** ist eine weitere Schnittansicht durch ein automatisches Kupplungssystem für ein Nutzfahrzeugsystem aus einem Nutzfahrzeuganhänger und einem Nutzfahrzeugzugfahrzeug gezeigt. In der dargestellten Situation befindet sich das automatische Kupplungssystem im eingekuppelten Zustand. Bei der in der Figur 4 dargestellten Ausführungsform ist ein Austreten des Königszapfens 8 formschlüssig aus der Einfahröffnung 5 der Sattelkupplungsplatte 4 verhindert. Der Antrieb 12 der Primärkopplungsvorrichtung 1 ist innerhalb des Grundkörpers 10 angeordnet, wobei der Grundkörper 10 durch eine Blechkonstruktion realisiert ist. In dem dargestellten Zustand ist das Steckerelement 14 mit der Steckervorrichtung 22 verbunden, wobei die Steckervorrichtung 22 drehbar um den Königszapfen 8 durch die Tragstruktur 24 gelagert ist.

### Bezugszeichenliste:

- 1: Primärkopplungsvorrichtung
- 2: Sattelkupplungsanordnung
- 4: Sattelkupplungsplatte
- 5: Einfahröffnung
- 6: Aufliegerfläche
- 7: Querverbinder
- 8: Königszapfen
- 10: Grundkörper
- 12: Antrieb
- 14: Steckerelement
- 20: Sekundärkopplungsvorrichtung
- 22: Steckervorrichtung
- 24: Tragstruktur / Tragarm
- N: Normale der Aufliegerfläche (6)
- V: Verlagerungsrichtung

## Patentansprüche

1. Sattelkupplungsanordnung (2) umfassend eine Primärkopplungsvorrichtung (1) und eine Sattelkupplungsplatte (4),
wobei die Sattelkupplungsplatte (4) eine Aufliegerfläche (6) aufweist,
wobei die Sattelkupplungsplatte (4) eine nach außen weisende Normale (N) aufweist,
wobei die Sattelkupplungsplatte (4) eine Einfahröffnung (5) aufweist,
wobei die Primärkopplungsvorrichtung (1) einen Grundkörper (10), einen Antrieb (12) und ein Steckerelement (14) umfasst,
wobei der Grundkörper (10) dazu ausgelegt ist, an der Sattelkupplungsanordnung (2) und/oder dem Anhänger festgelegt zu sein,
wobei das Steckerelement (14) relativ zum Grundkörper (10) mittels des Antriebs (12) in eine Verlagerungsrichtung (V) verlagerbar ist,
**dadurch gekennzeichnet, dass** die Verlagerungsrichtung (V) parallel zur Erstreckungsrichtung der Einfahröffnung (5) der Sattelkupplungsplatte (4) ausgerichtet ist.

2. Sattelkupplungsanordnung (2)gemäß Anspruch 1,
wobei der Antrieb (12) einen Energieanschluss aufweist.

3. Sattelkupplungsanordnung (2)gemäß einem der vorhergehenden Ansprüche, wobei der Antrieb (12) ein hydraulischer, elektrischer oder pneumatischer Antrieb ist.

4. Sattelkupplungsanordnung (2)gemäß einem der vorhergehenden Ansprüche, wobei der Antrieb (12) ein Druckluftzylinder ist.

5. Sattelkupplungsanordnung (2)gemäß einem der vorhergehenden Ansprüche, wobei der Antrieb (12) ein einfachwirkender Zylinder ist.

6. Sattelkupplungsanordnung (2)gemäß einem der vorhergehenden Ansprüche, wobei die Primärkopplungsvorrichtung (1) einen zweiten Antrieb (16) aufweist.

7. Sattelkupplungsanordnung (2)gemäß Anspruch 6,
wobei der erste und der zweite Antrieb (12, 16) parallel angeordnet sind.

8. Sattelkupplungsanordnung (2)gemäß einem der vorhergehenden Ansprüche, wobei das Steckerelement (14) nur durch den Antrieb (12) und/oder durch den zweiten Antrieb (16) und/oder durch Federelemente verlagerbar ist.

9. Sattelkupplungsanordnung (2)gemäß einem der vorhergehenden Ansprüche,
wobei das Steckerelement (14) hydraulische und/oder pneumatische und/oder elektrische Kontakte umfasst.

10. Sattelkupplungsanordnung (2) gemäß einem der vorhergehenden Ansprüche,
wobei das Steckerelement (14) und/oder der Grundkörper (10) in einer Richtung senkrecht zu der Verlagerungsrichtung (V), insbesondere in Richtung einer Normalen (N) der Aufliegerfläche (6) und/oder in eine Querrichtung, verschiebbar gelagert ist/sind,
insbesondere um 5mm.

11. Sattelkupplungsanordnung gemäß einem der vorhergehenden Ansprüche, wobei das Steckerelement (14) und/oder der Grundkörper (10) in einer Richtung um die Normale (N) schwenkbar gelagert ist/sind,
insbesondere um maximal +/- 10°, bevorzugt um maximal +/- 5°.

12. Verfahren zum Verbinden von Energieleitungen einer Sattelkupplungsanordnung (2) und Leitungen eines Anhängers,
wobei der Anhänger einen Königszapfen (8) und eine Sekundärkopplungsvorrichtung (20) aufweist,
wobei die Sattelkupplungsanordnung (2) eine Sattelkupplungsanordnung (2) nach einem der Ansprüche 1 bis 11 ist,
wobei der Königszapfen (8) von einer entkoppelten Position zu einer eingekuppelten Position relativ zur Sattelkupplungsplatte (4) verlagert wird, und wobei die Primärkopplungsvorrichtung (1) mit der Sekundärkopplungsvorrichtung (20) verbunden wird.

13. Verfahren nach Anspruch 12,
wobei nach dem Anordnen des Königszapfens (8) in der eingekuppelten Position die Primärkopplungsvorrichtung (1) mit der Sekundärkopplungsvorrichtung (20) verbunden wird,
insbesondere durch Betätigung des Antriebs (12).

14. Verfahren nach einem der Ansprüche 12 - 13,
wobei 0,1 bis 0,5 Sekunden vor dem Anordnen des Königszapfens (8) in der eingekuppelten Position der Antrieb aktiviert wird und/oder wird die Primärkopplungsvorrichtung (1) mit der Sekundärkopplungsvorrichtung (20) verbunden.

## Claims

1. Fifth wheel assembly (2) comprising a primary coupling device (1) and a fifth wheel plate (4),
wherein the fifth wheel plate (4) has a trailer surface (6),
wherein the fifth wheel plate (4) has an outwardly facing normal (N),
wherein the fifth wheel plate (4) has a retractable opening (5),
wherein the primary coupling device (1) comprises a base body (10), a drive (12) and a plug-in element (14),
wherein the base body (10) is adapted to be fixed to the fifth wheel assembly (2) and/or the trailer,
wherein the plug-in element (14) is displaceable relative to the base body (10) by means of the drive (12) in a displacement direction (V), **characterised in that** the displacement direction (V) is aligned parallel to the direction in which the entry opening (5) of the fifth wheel plate (4) extends.

2. Fifth wheel assembly (2) according to claim 1,
wherein the drive (12) has a power connection.

3. Fifth wheel assembly (2) according to any of the preceding claims, wherein the drive (12) is a hydraulic, electric or pneumatic drive.

4. Fifth wheel assembly (2) according to any one of the preceding claims,
wherein the drive (12) is a compressed air cylinder.

5. Fifth wheel assembly (2) according to any of the preceding claims, wherein the drive (12) is a single-acting cylinder.

6. Fifth wheel assembly (2) according to any one of the preceding claims, wherein the primary coupling device (1) comprises a second drive (16).

7. Fifth wheel assembly (2) according to claim 6,
wherein the first and second drives (12, 16) are arranged in parallel.

8. Fifth wheel assembly (2) according to one of the preceding claims, wherein the plug-in element (14) can be displaced only by the drive (12) and/or by the second drive (16) and/or by spring elements.

9. Fifth wheel assembly (2) according to any of the preceding claims,
wherein the plug-in element (14) comprises hydraulic and/or pneumatic and/or electric contacts.

10. Fifth wheel assembly (2) according to one of the preceding claims,
wherein the plug-in element (14) and/or the base body (10) is/are mounted displaceably in a direction perpendicular to the displacement direction (V), in particular in the direction of a normal (N) of the trailer surface (6) and/or in a transverse direction,
in particular by 5 mm.

11. Fifth wheel assembly according to one of the preceding claims, wherein the plug-in element (14) and/or the base body (10) is/are mounted so as to be pivotable in one direction about the normal (N),
in particular by a maximum of +/- 10°, preferably by a maximum of +/- 5°.

12. Method of connecting power lines of a fifth wheel assembly (2) and lines of a trailer,
the trailer having a king pin (8) and a secondary coupling device (20), wherein the fifth wheel assembly (2) is a fifth wheel assembly (2) according to any one of claims 1 to 11,
wherein the king pin (8) is displaced from an uncoupled position to an engaged position relative to the fifth wheel plate (4), and wherein the primary coupling device (1) is connected to the secondary coupling device (20).

13. Method according to claim 12,
wherein, after placing the king pin (8) in the engaged position, the primary coupling device (1) is connected to the secondary coupling device (20) in particular by actuating the drive (12).

14. Method according to any one of claims 12 - 13,
wherein 0.1 to 0.5 seconds before the king pin (8) is placed in the engaged position, the drive is activated and/or the primary coupling device (1) is connected to the secondary coupling device (20).

## Revendications

1. Ensemble de sellette d'attelage (2) comportant un dispositif de couplage primaire (1) et un plateau de sellette d'attelage (4),
dans lequel
le plateau de sellette d'attelage (4) comprend une surface d'appui de remorque (6),
le plateau de sellette d'attelage (4) présente une normale (N) dirigée vers l'extérieur,
le plateau de sellette d'attelage (4) présente une ouverture d'insertion (5),
le dispositif de couplage primaire (1) comprend un corps de base (10), un entraînement (12) et un élément d'enfichage (14),
le corps de base (10) est conçu pour être immobilisé à l'ensemble de sellette d'attelage (2) et/ou à la remorque,
l'élément d'enfichage (14) peut être déplacé par rapport au corps de base (10) dans une direction de déplacement (V) au moyen de l'entraînement (12),
**caractérisé en ce que** la direction de déplacement (V) est orientée parallèlement à la direction d'extension de l'ouverture d'insertion (5) du plateau de sellette d'attelage (4).

2. Ensemble de sellette d'attelage (2) selon la revendication 1,
dans lequel l'entraînement (12) présente un raccordement d'énergie.

3. Ensemble de sellette d'attelage (2) selon l'une des revendications précédentes,
dans lequel l'entraînement (12) est un entraînement hydraulique, électrique ou pneumatique.

4. Ensemble de sellette d'attelage (2) selon l'une des revendications précédentes,
dans lequel l'entraînement (12) est un vérin pneumatique.

5. Ensemble de sellette d'attelage (2) selon l'une des revendications précédentes,
dans lequel l'entraînement (12) est un vérin à simple effet.

6. Ensemble de sellette d'attelage (2) selon l'une des revendications précédentes,
dans lequel le dispositif de couplage primaire (1) comprend un deuxième entraînement (16).

7. Ensemble de sellette d'attelage (2) selon la revendication 6,
dans lequel les premier et deuxième entraînements (12, 16) sont disposés en parallèle.

8. Ensemble de sellette d'attelage (2) selon l'une des revendications précédentes,
dans lequel l'élément d'enfichage (14) peut être déplacé uniquement par l'entraînement (12) et/ou par le deuxième entraînement (16) et/ou par des éléments de ressort.

9. Ensemble de sellette d'attelage (2) selon l'une des revendications précédentes,
dans lequel l'élément d'enfichage (14) comprend des contacts hydrauliques et/ou pneumatiques et/ou électriques.

10. Ensemble de sellette d'attelage (2) selon l'une des revendications précédentes,
dans lequel l'élément d'enfichage (14) et/ou le corps de base (10) est/sont monté(s) de façon mobile en translation,
en particulier de 5 mm,
dans une direction perpendiculaire à la direction de déplacement (V), en particulier en direction d'une normale (N) à la surface d'appui de remorque (6) et/ou dans une direction transversale.

11. Ensemble de sellette d'attelage selon l'une des revendications précédentes,
dans lequel l'élément d'enfichage (14) et/ou le corps de base (10) est/sont monté(s) de manière à pouvoir pivoter dans une direction autour de la normale (N),
en particulier de +/- 10° au maximum, de préférence de +/- 5° au maximum.

12. Procédé de connexion des câbles d'énergie d'un ensemble de sellette d'attelage (2) et des câbles d'une remorque,
dans lequel
la remorque comprend un pivot central (8) et un dispositif de couplage secondaire (20),
l'ensemble de sellette d'attelage (2) est un ensemble de sellette d'attelage (2) selon l'une des revendications 1 à 11,
le pivot central (8) est déplacé d'une position découplée à une position couplée par rapport au plateau de sellette d'attelage (4), et
le dispositif de couplage primaire (1) est relié au dispositif de couplage secondaire (20).

13. Procédé selon la revendication 12,
dans lequel, après la mise en place du pivot central (8) en position couplée, le dispositif de couplage primaire (1) est relié au dispositif de couplage secondaire (20),
en particulier par actionnement de l'entraînement (12).

14. Procédé selon l'une des revendications 12 à 13,
dans lequel, 0,1 à 0,5 seconde avant la mise en place du pivot central (8) en position couplée, l'entraînement est activé et/ou le dispositif de couplage primaire (1) est relié au dispositif de couplage secondaire (20).
